# EUROPÄISCHE PATENTSCHRIFT

(11) **EP 0 805 328 B1**
(45) Veröffentlichungstag und Bekanntmachung des Hinweises auf die Patenterteilung: **28.08.2002**
(21) Anmeldenummer: 97105472.1
(22) Anmeldetag: 02.04.1997
(51) Int. Cl.: F28D 9/00, F28F 3/08

(54) **Strömungsmodul**
Flow module
Module d'écoulement

(30) Priorität: 02.05.1996 DE 19617396
(43) Veröffentlichungstag der Anmeldung: 05.11.1997
(73) Patentinhaber: BALLARD POWER SYSTEMS INC., Burnaby, British Columbia V5J 5J9 (CA)
(72) Erfinder: Schmid, Ottmar, Dipl.-Ing., 88677 Markdorf (DE); Nigsch, Harald, Dipl.-Ing., 88213 Ravensburg (DE)
(74) Vertreter: Patentanwälte Ruff, Wilhelm, Beier, Dauster & Partner

(56) Entgegenhaltungen:
- EP-A- 0 384 944
- DE-A- 3 028 304
- DE-C- 725 155
- FR-A- 2 533 021
- GB-A- 477 999
- US-A- 4 124 478
- US-A- 5 212 022

## Beschreibung

Die Erfindung betrifft ein Strömungsmodul nach dem Oberbegriff des Anspruchs 1. Derartige Strömungsmodule werden z.B. als Plattenwärmetauscher für den Wärmeaustausch zweier Fluide benutzt.

Bekannte Strömungsmodule in der Form von Plattenwärmetauschern wie z.B. in der **EP 0 578 933 A1, EP 0 203 213 A1 und EP 0 487 931 A1** beschrieben, versuchen durch aufwendige Strukturen der Profilierung im Platteneinlauf- und Plattenauslaufbereich eine homogene Strömung über den Plattenbereich zu erreichen. Diese Platteneinlauf- und Plattenauslaufprofilierungen weisen folgende Nachteile auf:
- Der wesentliche Druckabfall erfolgt über einen kleinen Teil der wärmeaustauschenden Fläche im Platteneinlauf- und Plattenauslaufbereich und wird somit nicht effizient zur Realisierung einer möglichst starken Strömung über die ganze Platte eingesetzt.
- Es tritt ein hoher Druckabfall auf, der eine hohe Pumpleistung erfordert.
- Die Strömungsverteilung im Platteneinlauf- und Plattenauslaufbereich ist stark abhängig von der Strömungsgeschwindigkeit und verschlechtert sich erheblich mit zunehmender Strömungsgeschwindigkeit.

Die gleichen Probleme treten auf, wenn das Strömungsmodul anstatt als Wärmetauscher als Stoffaustauscher (jede zweite Platte ist durchlässig für mindestens eines der beiden Fluide, z.B. **JP 1-230 991 A**) oder als Reaktor (eines der beiden Fluide wird durch Beschichtung einzelner Platten mit einem reaktiven Stoff, z.B. einem Katalysator in Kontakt gebracht, das andere Fluid dient zur Temperierung des Reaktors, **z.B. DE 34 34 415 A1**) verwendet wird. (Anmerkung: die bisher als "Platten" bezeichneten Gegenstände werden im folgenden verallgemeinernd als "Plattenelemente" bezeichnet).

Eine Vorrichtung, mit dem die obengenannten Probleme gelöst werden, ist in der **JP 3-177 791 A** offenbart. Diese Vorrichtung entspricht dem Oberbegriff des Anspruchs 1. Sie umfaßt insbesondere eine geradlinig parallel ausgebildete Profilierung , und die Durchbrechungen in den einzelnen Plattenelementen für die Zu- und Abfuhrkanäle erstrecken sich im wesentlichen über den gesamten Bereich der Profilierung. Eine derartige Ausbildung der Durchbrechungen für die Zu- und Abfuhrkanäle ist darüberhinaus auch aus der **DE-OS 15 01 617** bekannt.

Nachteilig an diesen Vorrichtungen ist, daß aufgrund der beschriebenen Ausbildung der Durchbrechungen für die Zu- und Abfuhrkanäle die Längsleisten der einzelnen Plattenelemente unter Druckbetrieb nach außen gedrückt werden. Dies kann zur Zerstörung der Vorrichtung führen. Insbesondere aber besteht die Gefahr von Undichtigkeiten, da die zwischen den Plattenelementen angeordneten Dichtungen verschoben werden können.

Der vorliegenden Erfindung liegt deshalb die Aufgabe zugrunde, ein Strömungsmodul zu schaffen, mit dem auch unter Druckbetrieb die Stabilität der Vorrichtung erhalten bleibt, ohne daß die Strömungseigenschaften im Platteneinlauf- und Plattenauslaufbereich wesentlich verschlechtert werden.

Diese Aufgabe wird mit einer Vorrichtung nach Patentanspruch 1 gelöst. Vorteilhafte Ausbildungen sind Gegenstand weiterer Ansprüche.

Die Plattenelemente weisen eine geradlinige parallele Profilierung auf, so daß ein Strömungsraum zwischen jeweils zwei benachbarten Plattenelementen als Mehrzahl geradliniger, paralleler Strömungskanäle ausgebildet ist, und die Durchbrechungen für die Zu- und Abfuhrkanäle der beiden Fluide erstrecken sich im wesentlichen über den gesamten Bereich der Profilierung, so daß ein ausgeprägter Zu- und Abführraum gebildet ist. In den Durchbrechungen für die Zu- und Abfuhrkanäle sind erfindungsgemäß mehrere Stege zur mechanischen Stabilisierung angeordnet, wobei in profilierten Plattenelementen diejenigen Stege, welche im Einlaufbereich oder Auslaufbereich der Profilierung angeordnet sind, unterhalb der Plattenelementoberfläche enden.

In einer vorteilhaften Ausführung ist der Querschnitt der Zu- oder Abfuhrkanäle größer ist als die Summe der Querschnitte der zwischen zwei benachbarten Plattenelementen vorhandenen Strömungskanälen. Wie bereits erwähnt, kann das erfindungsgemäße Strömungsmodul bevorzugt, jedoch nicht ausschließlich, als Wärmetauscher, Stoffaustauscher oder Reaktor verwendet werden.

Durch die erfindungsgemäße Ausbildung der Stege wird eine verbesserte Versorgung der Strömungskanäle ermöglicht, so daß die gesamte Fläche für den Wärme- oder Stoffaustausch genutzt werden kann. Die Absenkung der Stege bewirkt darüberhinaus eine Vermischung der zwischen den einzelnen Stegen fliessenden Fluidanteile.

Durch die Größe und Geometrie des Zu- und Abführraums für die beiden beteiligten Fluide wird erreicht, daß der wesentliche Druckabfall in den profilierten Plattenelementen nahezu gleichmäßig über die ganze Länge der parallelen Strömungskanäle entsteht. Dadurch wird nahezu höchste Effizienz hinsichtlich Wärme- oder Stoffaustausch pro Energiezusatz sowie ein sehr geringes Bauvolumen und kleine Masse erreicht, so daß ein Minimum an Investitionskosten realisiert wird.

Mit der erfindungsgemäßen Vorrichtung wird ein erhöhter flächenspezifischer Wärme- oder Stoffaustausch bei konstantem Fluiddruckabfall über die Plattenelemente erreicht, wobei die Gestehungskosten nicht erhöht werden müssen.

Die beiden beteiligten Fluide können sowohl in gasförmiger als auch in flüssiger Form vorliegen.

Für die Abdichtungen von Strömungsräumen und Zu- und Abfuhrkanälen werden bevorzugt Elastomerdichtungen verwendet. Diese können in Nuten (26), welche in den Plattenelementen verlaufen, integriert sein. Die Elastomerdichtungen können dabei in die Nuten vorteilhaft einvulkanisiert oder eingelegt oder eingespritzt werden. Neben den Elastomerdichtungen können natürlich auch alle sonstigen bekannten Dichtungsmöglichkeiten verwendet werden, z.B. durch Schweißen, Löten oder Kleben hergestellte feste Verbindungen.

### Ausführung als Wärmetauscher

In dieser Ausführung werden die profilierten Plattenelemente aus Werkstoffen gefertigt, die eine gute Wärmeleitfähigkeit aufweisen, wie z.B. Metalle und Graphit. Hierbei können sehr geringe Bearbeitungskosten durch den Einsatz einfacher Fertigungsverfahren wie Stanzen der Durchbrechungen und Prägen der Profilierung erreicht werden. Insbesondere die Verwendung von Graphitfolien als Plattenelemente die sehr einfach geprägt werden können, erlaubt auch den Einsatz von sehr aggressiven Fluiden wie konzentrierte Säuren oder Laugen.

Grundsätzlich können in der Ausführung als Wärmetauscher einseitig oder beidseitig profilierte Plattenelemente eingesetzt werden. Bei der Verwendung von beidseitig profilierten Plattenelementen werden jeweils zwischen profilierten Plattenelementen ein beidseitig glattes Plattenelement, d. h. ohne Profilierung über den ganzen Plattenelementdurchschnitt eingesetzt. Eine andere vorteilhafte Ausführung wird erreicht mit dem Einsatz von ausschließlich einseitig profilierten Plattenelementen.
Grundsätzlich können bei dieser Ausführungsform für die Primär- und Sekundärseite des Wärmetauschers sowohl flüssige als auch gasförmige Fluide eingesetzt werden. Häufig werden Gas/Gas- oder Gas/Flüssigwärmetauscher benötigt. Hierbei bestimmt der gasseitige Wärmeübergang den Wärmedurchgang. Durch die homogene Strömungsverteilung, die mit der erfindungsgemäßen Anordnung erzielt wird, können hohe spezifische Wärmetauscherleitungen realisiert werden.

### Ausführung als Stoffaustauscher

In dieser Ausführung läßt fortlaufend jedes zweite Plattenelement einen Stoffaustausch zwischen den beiden beteiligten Fluide zu. Insbesondere können diese durchlässigen Plattenelemente als Membrane oder Membrankombinationen wie z.B. Composite Membranen ausgebildet sein. Man spricht dann von Membranmodulen. In dieser Ausführung folgt jeweils auf ein beidseitig profiliertes und stoffundurchlässiges Plattenelement eine Membran, die naturgemäß keine Profilierung aufweist.
Mit diesem Modul können unterschiedliche Membranprozesse wie z.B. Membrandestillation, Pervaporation, Pertraction und Mikrofiltration durchgeführt werden. Besonders vorteilhaft wirkt sich dabei die homogene Strömungsverteilung der Fluide über das profilierte Plattenelement auf die Trennleistung der Membranmodule aus. Die Plattenkonstruktion erlaubt den Einbau unterschiedlicher Membranen wie z.B. porös hydrophil, porös hydrophob, dichte Membranen, asymmetrische Membrane und Composite Membranen. Dabei kann durch Anpassung des Plattenelements, sowie der an den Plattenelementen vorhandenen Dichtung hinsichtlich Form und Werkstoff sowie Härte der Dichtung und Geometrie der profilierten Plattenoberfläche das Strömungsmodul an die jeweilige Anwendung angepaßt werden. Jedoch sollte zur Realisierung einer homogenen Strömungsverteilung über die gesamte Länge der Strömungskanäle (Idealfall Propfenströmung) der Querschnitt der Fluid zu- bzw. Abführkanäle größer sein als die Summe der Querschnitte der Strömungskanäle innerhalb eines profilierten Plattenelements. Grundsätzlich können für Permeat und Feed sowohl flüssige als auch gasförmige Fluide eingesetzt werden.

### Ausführung als Reaktor

In dieser Ausführung sind einzelne Oberflächen von Plattenelementen mit einem reaktiven Material, z.B. einem Katalysator beschichtet. Diese Oberflächen werden derart ausgewählt, daß genau eines der beiden Fluide auf seinem Weg durch das Strömungsmodul mit dem reaktiven Material in Kontakt kommt. Der Reaktor kann grundsätzlich analog wie in der Ausführung als Wärmetauscher mit einseitig oder beidseitig profilierten Plattenelementen eingesetzt werden. Bei der Verwendung von beidseitig profilierten Plattenelementen werden jeweils zwischen profilierten Plattenelementen ein beidseitig unprofiliertes (z.B. mit annähernd glatter Oberfläche) Plattenelement angeordnet. Eine weitere vorteilhafte Ausführung wird erreicht durch jeweils nur einseitig profilierten Plattenelemente.
Der Katalysator reagiert mit einem der Fluide in den für dieses Fluid vorgesehen Strömungskanäle (entspricht der Sekundärseite des Wärmetauschers). Die Strömungskanäle des zweiten Fluids jedoch sind frei von dem Katalysator (entspricht der Sekundärseite des Wärmetauschers). Das zweite Fluid dient zur Temperierung des Reaktors.
Der Katalysator wird auf die Plattenelemente, die primärseitig angeordnet sind, z.B durch ein thermisches Beschichtungsverfahren, aufgebracht. Bei vielen Reaktoren findet der größte Umsatz innerhalb des ersten Drittels des Reaktors statt. Die überwiegende Reaktorlänge wird benötigt, um die restlichen Reaktanten, die aufgrund der ungenügenden homogenen Strömungsverteilung verblieben sind, umzusetzen. Die Strömungsverteilung bzw. das Verweilzeitspektrum der Reaktanten beeinflußt die Reaktorgröße wesentlich. Da mit der erfindungsgemäßen Ausbildung eine sehr homogene Strömungsverteilung erzielt wird, ist sie für den Einsatz als Reaktor besonders geeignet.

Ausführungsbeispiele der erfindungsgemäßen Vorrichtung werden anhand von Fig. näher erläutert. Es zeigen:
- Fig. 1: ein erfindungsgemäßes Strömungsmodul, ausgebildet als Plattenwärmetauscher (explodiert)
- Fig. 2: ein einzelnes Plattenelement mit profilierter Oberfläche
- Fig. 3: eine Schnittdarstellung des Plattenelements nach Fig. 2 (Schnittlinie AA in Fig. 2)
- Fig. 4: ein Detail aus Fig. 2
- Fig. 5: ein erfindungsgemäßes Strömungsmodul, ausgebildet als Plattenwärmetauscher (explodiert)
- Fig. 6: ein erfindungsgemäßes Strömungsmodul, ausgebildet als Stoffaustauscher (explodiert)
- Fig. 7,8: jeweils ein erfindungsgemäßes Strömungsmodul, ausgebildet als Reaktor (explodiert).

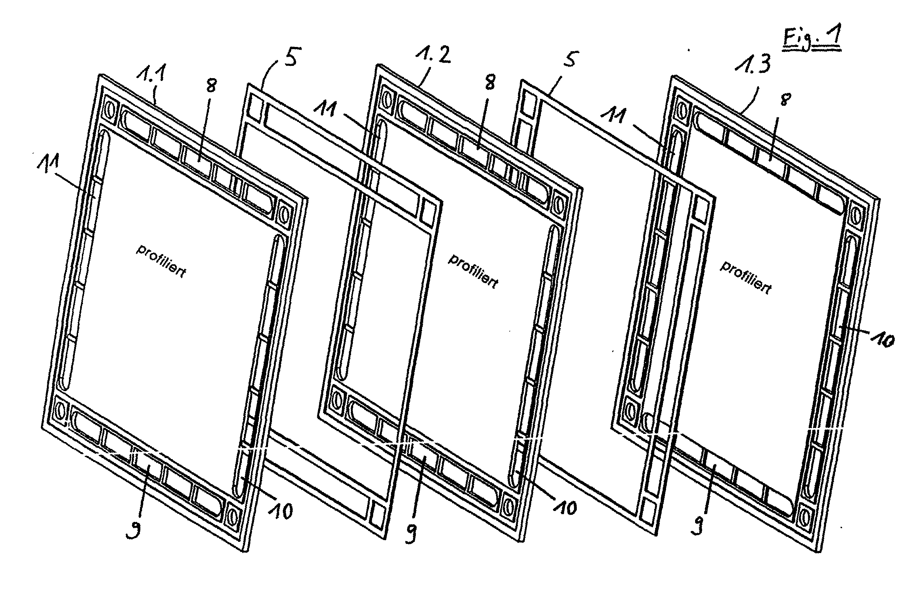

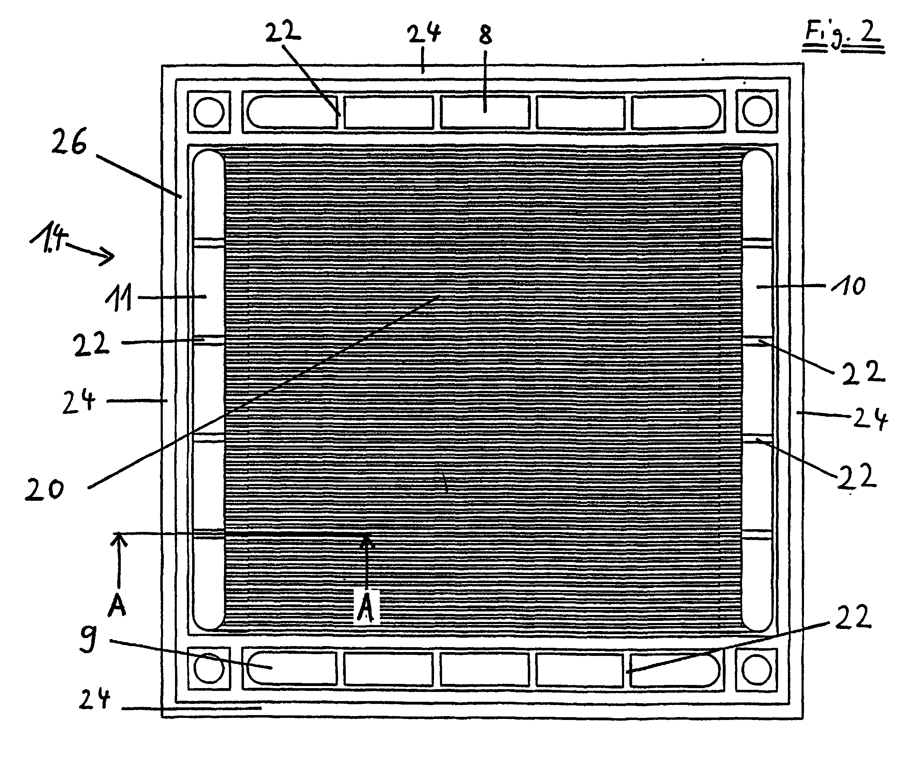

Fig. 1 zeigt ein erstes Beispiel für eine erfindungsgemäße Vorrichtung in Explosionsdarstellung, hier als Wärmetauscher ausgebildet. Die Vorrichtung umfaßt eine Mehrzahl von Plattenelementen 1.1 - 1.3 (Plattenelemente, die mindestens auf einer Oberfläche eine Profilierung aufweisen, werden im folgenden auch als Strömungsplatten bezeichnet) aus wärmeleitfähigem Material, von denen hier drei eingezeichnet sind. Im vorliegenden Fall weist jeder der drei Plattenelemente 1.1 - 1.3 eine einseitige Profilierung auf (die Profilierung selbst ist in der Fig. nicht dargestellt), und zwar befindet sich die Profilierung jeweils auf der dem Betrachter zugewandten Oberfläche der Plattenelemente. Diese Profilierung bildet Strömungskanäle für die beteiligten Fluide. Die Profilierung ist im einzelnen in Fig. 2 dargestellt. Auf diese Weise werden jeweils zwischen den Oberflächen benachbarter Plattenelemente 1.1 und 1.2 bzw 1.2 und 1.3 Strömungsräume (bestehend aus den einzelnen Strömungskanälen einer profilierten Oberfläche) gebildet. Diese Strömungsräume zwischen benachbarten Plattenelementen können alternierend mit einem ersten und zweiten Fluid beschickt werden. So strömt z.B. zwischen linkem 1.1 und mittlerem 1.2 Plattenelement das erste Fluid, und zwischen mittleren 1.2 und rechten Plattenelement 1.3 das zweite Fluid. Jenseits des rechten Plattenelements 1.3 fließt dann wieder das erste Fluid usw..
Die Zu- und Abführkanäle für die beiden Fluide werden durch miteinander fluchtende Durchbrechungen 8,9,10,11 an den Rändern der Plattenelemente 1.1 - 1.3 gebildet. In der hier gezeigten Ausführung ist jede der vier Durchbrechungen jeweils mit mehreren Stegen 22 zur mechanischen Stabilisierung versehen. Die beiden Durchbrechungen 10,11 am linken bzw. rechten Rand sind für die Zu- und Abfuhr des ersten Fluids vorgesehen, und die beiden Durchbrechungen 8,9 am oberen bzw. unteren Rand für die Zu- und Abfuhr des zweiten Fluids. Entsprechend dieser Lage der Durchbrechungen für die Zu- und Abfuhr der beiden Fluide sind die Strömungskanäle von Plattenelement zu Plattenelement fortlaufend um 90° zueinander verdreht. Um die abwechselnde Beschickung mit Fluid 1 und Fluid 2 zu gewährleisten, sind die beiden Dichtungen 5 entsprechend unterschiedlich ausgebildet. Bei der hier dargestellten Anordnung von Dichtungen 5 und Plattenelementen 1.1 bis 1.3 verläuft die geradlinige Profilierung im linken 1.1 und rechten 1.3 Plattenelement parallel zur oberen oder unteren Kante und im mittleren Plattenelement 1.2 parallel zur linken oder rechten Kante.
Die zur Realisierung einer verläßlichen Dichtung sowie zur Minimierung der Gestehungskosten zwischen jeweils zwei Plattenelementen eingesetzten Dichtungen 5 sind jeweils als umlaufende Dichtungen ausgebildet, die in einer umlaufenden Nut einer Plattenelementoberfläche integriert wird. Dabei können vorgefertigte Elastomerdichtungen in die Dichtungsnuten eingelegt werden. Ferner ermöglicht die Verwendung von Elastomerdichtungen deren direkte Einspritzung, so daß ein fester Verbund zwischen Dichtung und Plattenelement entsteht. Dadurch wird der Montageaufwand erheblich vermindert.

Die Zu- und Abfuhrkanäle sind über nicht dargestellte Flansche mit äußeren Zu- und Abführleitungen verbunden. Um die angestrebte homogene Strömungsverteilung über den gesamten profilierten Bereich der Plattenelemente zu erreichen, muß die Fluidführung durch die äußeren Zu- und Abfuhrleitungen mit möglichst geringem Druckverlust und homogener Strömungsverteilung geschehen. Dies wird konstruktiv durch große Strömungsquerschnitte im Bereich der Zu- und Abführkanäle der Flansche erreicht, indem die Flansche im Bereich der Zu- und Abführkanäle Aussparungen aufweisen. Ferner kann eine homogene Strömungsführung durch eine Zwischenplatte erreicht werden, die zwischen Flansch und erstem Plattenelement bzw. Flansch und letztem Plattenelement angeordnet ist.

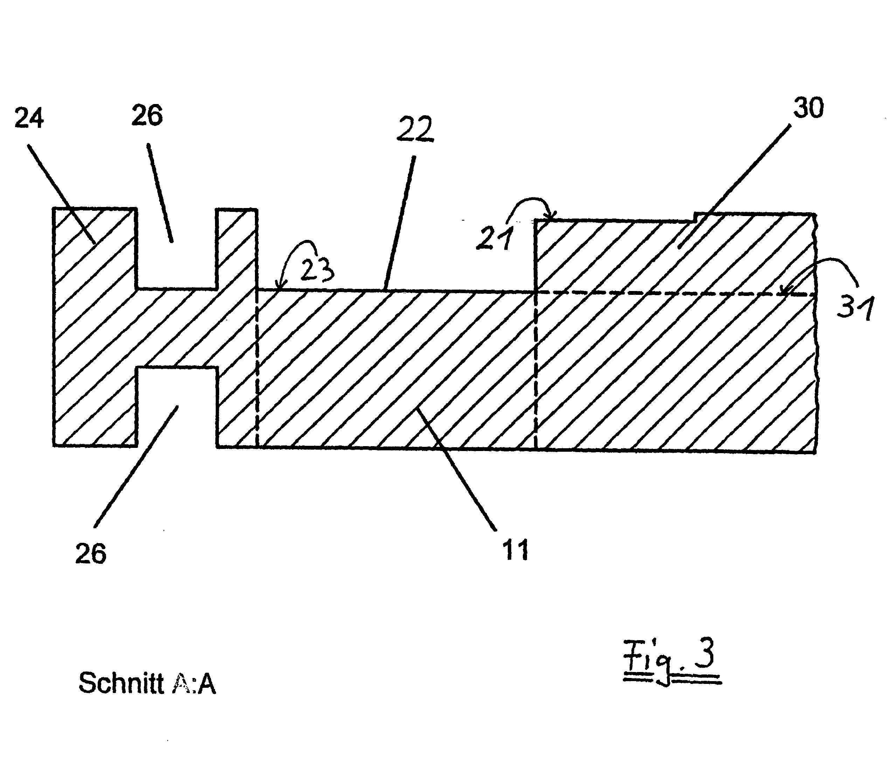

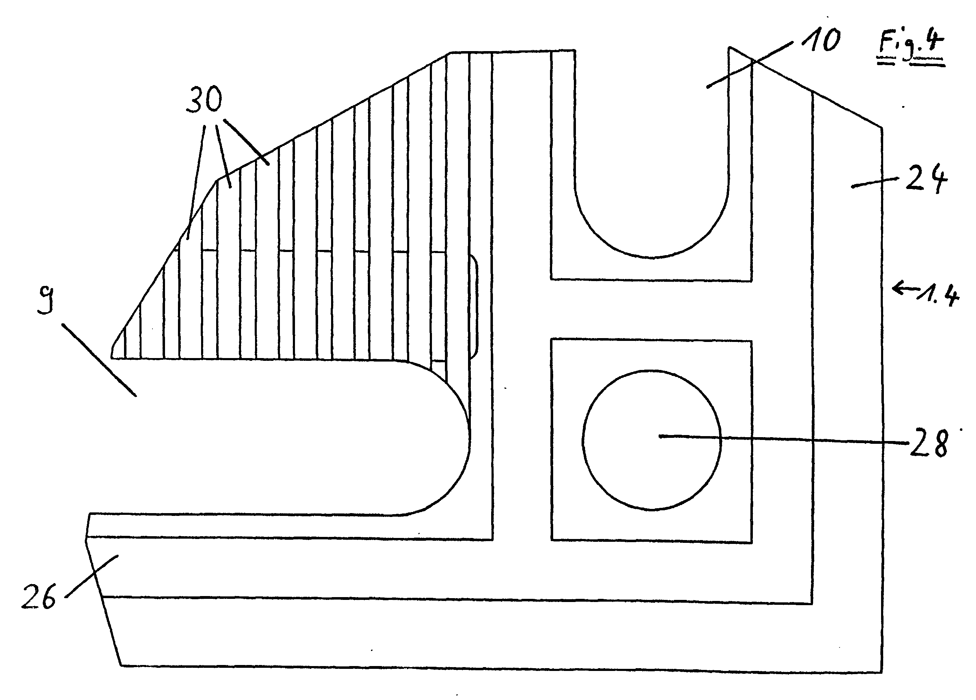

Ein einzelnes, profiliertes Plattenelement 1.4, wie es in dem Strömungsmodul nach Fig. 1 aber auch in anderen Ausführungen der erfindungsgemäßen Vorrichtung (z.B. Stofftauscher, Reaktor) verwendet werden kann, zeigt Fig. 2 in Draufsicht. Der größte Teil der Oberfläche wird von dem profilierten Bereich 20 eingenommen. Die Profilierung bildet geradlinige, parallele Strömungskanäle 30 (Fig. 4). An den Rändern sind die Durchbrechungen 8,9,10,11 für die Zu- und Abfuhr der beiden Fluide angeordnet. Fluchtend übereinander angeordnet, bilden die Durchbrechungen 8,9,10,11 neben- oder übereinanderliegender Strömungsplatten Zu- und Abführkanäle. Am rechten Rand befindet sich die Durchbrechung 10 für die Zufuhr des ersten Fluids, an dem gegenüberliegenden linken Rand befindet sich die Durchbrechung 11 für die Abfuhr des ersten Fluids. Auf seinem Weg zwischen Zufuhrkanal und Abfuhrkanal strömt das erste Fluid durch die in der Fig. dargestellten Strömungskanäle der Profilierung. Die Durchbrechungen erstrecken sich entlang der Kantenläge des Plattenelements über den gesamten Bereich der Profilierung (quer zu den Strömungskanälen), so daß ein ausgeprägter Zu- und Abführraum für das Fluid gebildet wird.
Am oberen Rand befindet sich die Durchbrechung 8 für die Zufuhr des zweiten Fluids, und am gegenüberliegenden unteren Rand 9 befindet sich die Durchbrechung für die Abfuhr des zweiten Fluids. Dieses zweite Fluid strömt in der Profilierung der zu dem gezeigten Plattenelement benachbarten Plattenelement.
Die umlaufende Nut 26 sorgt für die Abdichtung von Zu- und Abfuhrkanälen nach außen sowie gegenüber den Strömungsräumen zwischen benachbarten Plattenelementen.
In den Durchbrechungen für die Zu- und Abfuhrkanälen sind die erfindungsgemäßen Stege 22 zur mechanischen Stabilisierung angeordnet, da der Fluiddruck in den Zu- und Abfuhrkanälen versucht, die Längsleisten 24 der Plattenelemente nach außen zu drücken. Die Stege sind jeweils zwischen den Längsleisten 24 und dem profilierten Bereich 20 des Plattenelements angeordnet. Die Anzahl der Stege 22 und deren Breite kann spezifisch an die mechanischen Anforderungen angepaßt werden. Die Oberflächen der Stege, welche im Einlaufbereich oder Auslaufbereich der Profilierung angeordnet sind (hier also die Stege in den Durchbrechungen 10 und 11) enden etwas unterhalb der profilierten Plattenoberfläche (in etwa auf dem unteren Niveau der Profilierung). Dadurch kann eine verbesserte Versorgung der Strömungskanäle im Stegbereich ermöglicht werden, um die gesamte Fläche für den Wärme- oder Stoffaustausch zu nutzen. Diese Absenkung der Stege bewirkt darüberhinaus eine Vermischung der zwischen den einzelnen Stegen fliessenden Fluidanteile. Der Aufbau der Stege 22 ist im Detail in Fig. 3 dargestellt.
Für die Strömungsplatten ist eine Vielzahl von Werkstoffen möglich. Besonders vorteilhaft hinsichtlich Leistungsdaten und Gestehungskosten haben sich aber Plattenausführungen aus Metall, Kunststoff oder Graphit erwiesen. Diese Werkstoffe können zur Herstellung der Profilierung und der Nuten für die Dichtungen mit einfachen und kostengünstigen Fertigungsverfahren wie Weichprägen/Stanzen, Spritzgießen etc. bearbeitet werden. Möglich sind aber auch spanabhebende Verfahren.
Das dargestellte profilierte Plattenelement 1.4 ist hier von rechteckiger Grundfläche. Dies ermöglicht eine homogene Zu- und Abfuhr der Fluide über die Durchbrechungen ohne separate Strömungsverteiler. Dabei sind alle Strömungskanäle einer Plattenoberfläche direkt mit dem Plattendurchbruch verbunden.

Fig. 3 zeigt eine Schnittdarstellung des Plattenelements 1.4 nach Fig. 2 (Schnitt entlang der Linie AA in Fig. 2). Man erkennt, daß der Steg 22 unterhalb der Plattenelementoberfläche 21, nämlich auf dem Niveau des Bodens 31 der Kanäle 30, endet. Die Oberfläche 23 des Stegs 22 und der Boden 31 der Kanäle 30 gehen somit stufenlos ineinander über. Die Bezugszeichen 24, 26, 11 bezeichnen die gleichen Bauteile wie in Fig. 2.

Fig. 4 zeigt ein Detail des Plattenelements 1.4 nach Fig. 2. Zu erkennen sind die Strömungskanäle 30 auf der Plattenelementoberfläche, sowie die Durchbrechungen 10,9 für die Zufuhr des einen Fluids und die Abfuhr des anderen Fluids. Die umlaufende Nut 26 ist für die Integration der umlaufenden Dichtung vorgesehen. In der äußeren Ecke des Plattenelements befindet sich eine Bohrung 28 für die Zuganker, mit denen die über- oder nebeneinanderliegenden Plattenelemente aneinandergepreßt werden können.

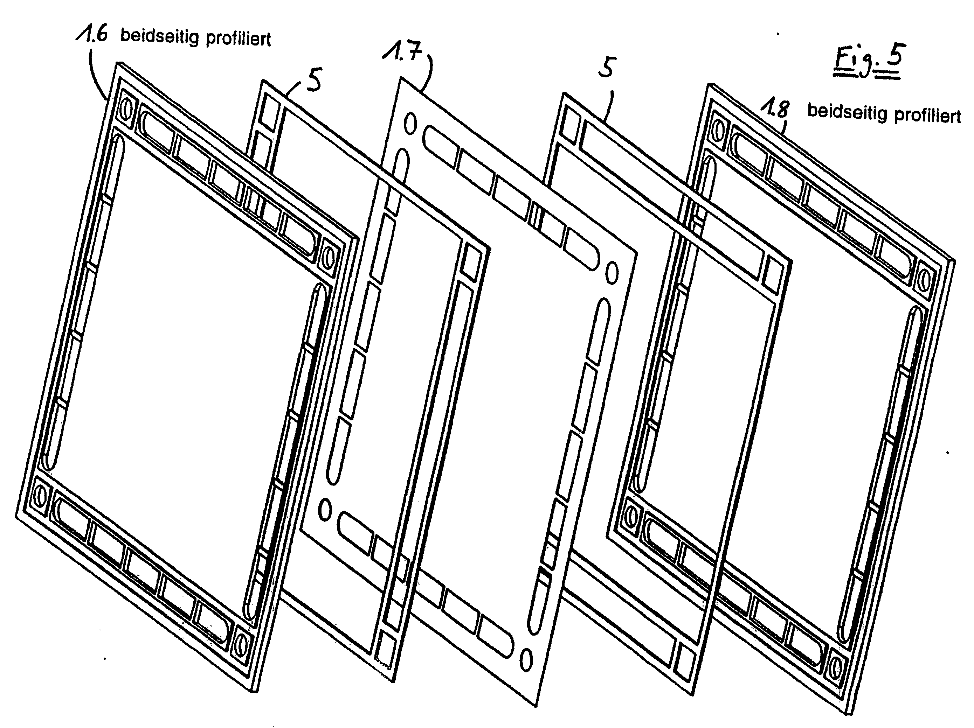

Fig. 5 zeigt ein weiteres Ausführungsbeispiel der Erfindung, welches als Wärmetauscher ausgebildet ist. Anders als in Fig. 1 sind die beiden äußeren Plattenelemente 1.6,1.8 nun auf beiden Oberflächen profiliert, während das mittlere Plattenelement 1.7 beidseitig eine glatte Oberfläche aufweist und als dichte Folie ausgebildet ist. Im übrigen entspricht diese Ausführung der in Fig. 1 gezeigten.

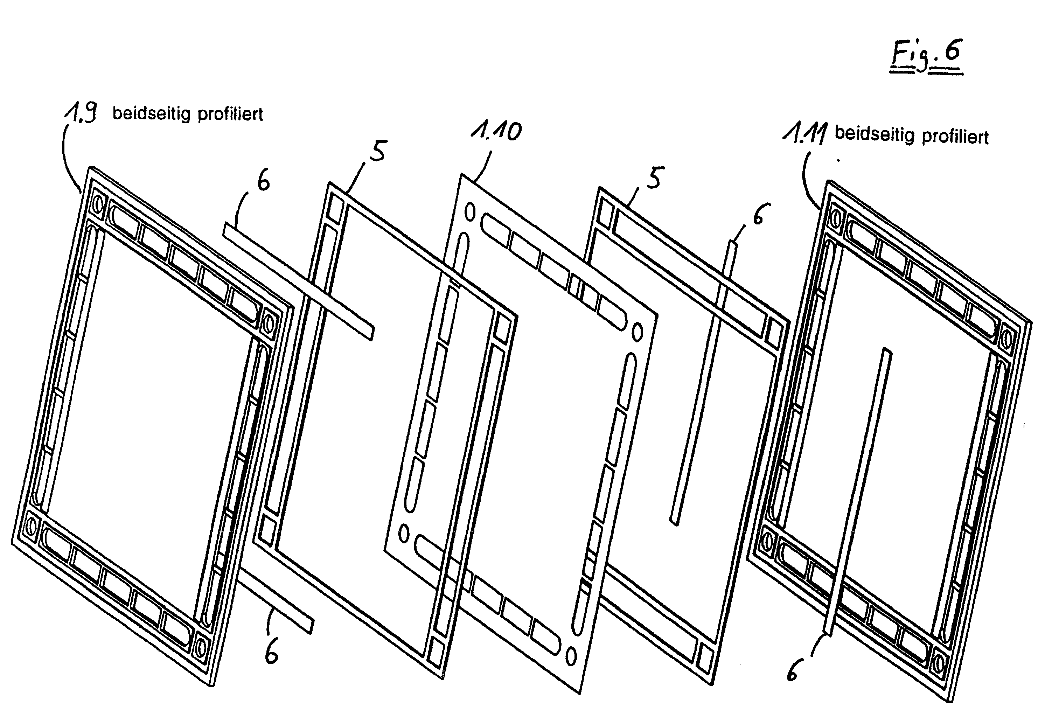

Fig. 6 zeigt eine als Membranmodul ausgebildete Ausführung. Dargestellt sind drei Plattenelemente 1.9 - 1.11, wobei die beiden äußeren 1.9,1.11 beidseitig profilierte, dichte Strömungsplatten sind. Das mittlere Plattenelement 1.10 ist als Membrane ausgebildet, die einen Stoffaustausch der beiden an die Membran angrenzenden Fluide ermöglicht.
Jeweils im Eintrittsbereich und Austrittsbereich der Strömungskanäle ist ein Stützblech 6 zur Abstützung der benachbarten Dichtung 5 angeordnet. Dieses Stützblech 6 verhindert außerdem ein Eindringen der Membran 1.10 in die Strömungskanäle. Zusätzlich wird durch die Integration des Stützblechs eine verläßliche Abdichtung erreicht.

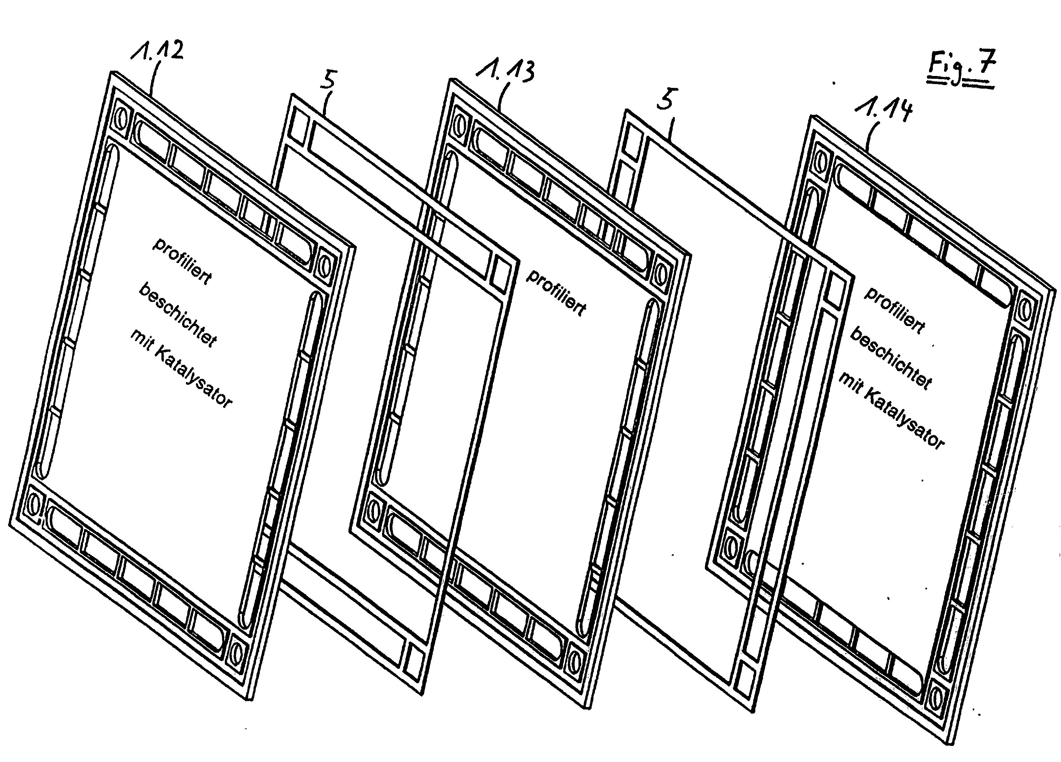

Fig. 7 zeigt einen erfindungsgemäß ausgebildeten Reaktor. Die drei dargestellten Plattenelemente 1.12 - 1.14 sind jeweils einseitig profiliert, wobei die Profilierung auf der dem Betrachter zugewandten Seite vorhanden ist.
Bei den beiden äußeren Plattenelementen 1.12, 1.14 sind die profilierten Oberflächen mit einem Katalysator beschichtet, während das mittlere Plattenelement 1.13 keine Katalysator-Beschichtung aufweist. Bei dieser Anordnung kommt also nur das Fluid (Reactant), welches sich zwischen mittlerem 1.13 und rechtem 1.14 Plattenelement sowie diesseits des linken Plattenelements 1.12 befindet, mit dem Katalysator in Kontakt, während das andere Fluid (Wärmeträger), das sich zwischen linkem 1.12 und mittlerem 1.13 Plattenelement sowie jenseits des rechten Plattenelements 1.14 befindet, keinen Kontakt mit dem Katalysator hat.

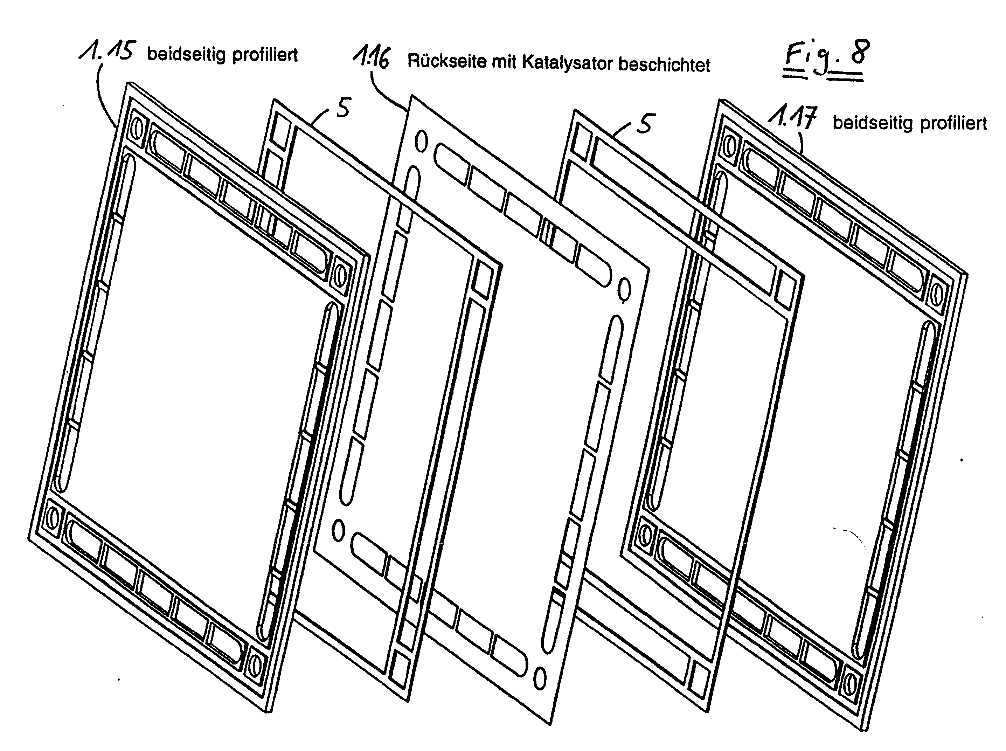

Fig. 8 zeigt einen weiteren erfindungsgemäß ausgebildeten Reaktor. Die beiden äußeren Plattenelemente 1.15, 1.17 sind beidseitig profiliert, weisen jedoch keine Katalysatorbeschichtung auf. Das mittlere Plattenelement 1.16 ist als dichte Folie ausgebildet, wobei die dem Betrachter abgewandte Seite mit einem Katalysator beschichtet ist. Bei dieser Anordnung kommt nur das Fluid (Reactant), welches sich zwischen mittlerem 1.16 und rechtem 1.17 Plattenelement sowie diesseits des linken Plattenelements 1.15 befindet, mit dem Katalysator in Kontakt, während das andere Fluid (Wärmeträger), das sich zwischen linkem 1.15 und mittlerem 1.16 Plattenmodul sowie jenseits des rechten Plattenelements 1.17 befindet, keinen Kontakt mit dem Katalysator hat.

Allen in den Fig. 1 sowie 5 bis 8 gezeigten Ausführungsbeispiele ist gemeinsam, daß genau einer der beiden sich gegenüberliegenden Oberflächen benachbarter Plattenelemente eine Profilierung aufweist. Dies wird in den meisten Fällen die fertigungstechnisch günstigste Lösung sein, schließt jedoch nicht aus, daß beide Oberflächen mit einer identischen Profilierung versehen werden, die insbesondere fluchtend übereinanderliegen.

## Patentansprüche

1. Strömungsmodul, umfassend eine Mehrzahl von Plattenelementen (1.1 - 1.17), wobei von den beiden jeweils sich gegenüberliegenden Oberflächen benachbarter Plattenelemente (1.1 - 1.4, 1.6, 1.8, 1.9, 1.11 - 1.15, 1.17) mindestens eine Plattenelementoberfläche eine geradlinig parallel ausgebildete Profilierung (20) aufweist, so daß zwischen benachbarten Plattenelementen Strömungsräume aus einer Mehrzahl geradliniger, paralleler Strömungskanäle (30) gebildet werden, wobei die Strömungsräume über Zu- und Abfuhrkanäle alternierend mit einem ersten und einem zweiten Fluid beschickt werden können, wobei die Zu- und Abführkanäle durch miteinander fluchtende Durchbrechungen (8,9,10,11) in den Plattenelementen (1.1 - 1.17) gebildet werden, und Dichtungen (5) für die Abdichtungen von Strömungsräumen und Zu- und Abfuhrkanälen vorhanden sind, und die Durchbrechungen (8,9,10,11) für die Zuund Abfuhrkanäle sich im wesentlichen über den gesamten Bereich der Profilierung (20) erstrecken, so daß ein entsprechender Zu- und Abführraum gebildet ist, **dadurch gekennzeichnet, daß** in den Durchbrechungen (8,9,10,11) für die Zu- und Abfuhrkanäle mehrere Stege (22) zur mechanischen Stabilisierung angeordnet sind, wobei in profilierten Plattenelementen die Oberflächen derjenigen Stege, welche im Einlaufbereich oder Auslaufbereich der Profilierung angeordnet sind, gegenüber der profilierten Plattenelementoberfläche (21) abgesenkt sind.

2. Strömungsmodul nach Anspruch 1, **dadurch gekennzeichnet, daß** die Plattenelemente (1.1 - 1.17) aus einem Material mit guter Wärmeleitfähigkeit bestehen.

3. Strömungsmodul nach Anspruch 1, **dadurch gekennzeichnet, daß** jedes zweite Plattenelement (1.10) eine Membran ist, die einen Stoffaustausch zwischen den beiden Fluiden ermöglicht.

4. Strömungsmodul nach Anspruch 1, **dadurch gekennzeichnet, daß** Oberflächen einzelner Plattenelemente (1.12, 1.14,1.16) mit einem reaktiven Material, z.B. einem Katalysator beschichtet sind, wobei die zu beschichtenden Oberflächen derart ausgewählt sind, daß nur eines der beiden Fluide mit dem reaktiven Material in Kontakt gebracht wird.

5. Strömungsmodul nach Anspruch 1, **dadurch gekennzeichnet, daß** von den beiden sich jeweils gegenüberliegenden Oberflächen benachbarter Plattenelemente genau eine Oberfläche eine Profilierung aufweist.

6. Strömungsmodul nach Anspruch 5, **dadurch gekennzeichnet, daß** die Plattenelemente (1.1,1.2,1.3) jeweils einseitig profiliert sind.

7. Strömungsmodul nach Anspruch 6, **dadurch gekennzeichnet, daß** fortlaufend jedes zweite Plattenelement (1.12,1.14,1.16) auf seiner Profilierung mit dem reaktiven Material beschichtet ist.

8. Strömungmodul nach Anspruch 5, **dadurch gekennzeichnet, daß** die Plattenelemente (1.6, 1.7, 1.8; 1.9, 1.10, 1.11; 1.15, 1.16, 1.17) abwechselnd entweder beidseitig profiliert sind oder beidseitig keine Profilierung aufweisen.

9. Strömungsmodul nach Anspruch 8, **dadurch gekennzeichnet, daß** die Plattenelemente, welche beidseitig keine Profilierung aufweisen, als Folien (1.7, 1.16) ausgebildet sind.

10. Strömungsmodul nach Anspruch 8, **dadurch gekennzeichnet, daß** die Plattenelemente, welche beidseitig unprofiliert sind, einseitig mit dem reaktiven Material beschichtet sind, so daß nur eines der beiden Fluide mit dem reaktiven Material in Kontakt gebracht wird.

11. Strömungsmodul nach Anspruch 10, **dadurch gekennzeichnet, daß** die Plattenelemente, welche beidseitig unprofiliert und einseitig mit einem reaktiven Material beschichtet sind (1.16), Folien sind.

12. Strömungsmodul nach Anspruch 8, **dadurch gekennzeichnet, daß** die Plattenelemente, welche keine Profilierung aufweisen, Membranen (1.10) sind, die einen Stoffaustausch zwischen den beiden Fluiden ermöglichen.

13. Strömungsmodul nach einem der vorangehenden Ansprüche, **dadurch gekennzeichnet, daß** der Querschnitt der Zu- oder Abfuhrkanäle größer ist als die Summe der Querschnitte der zwischen zwei benachbarten Plattenelementen vorhandenen Strömungskanälen (30).

14. Strömungsmodul nach einem der vorangehenden Ansprüche, **dadurch gekennzeichnet, daß** eine Druckabfallverhältnis zwischen Druckabfall über die Profilierung (20) und Druckabfall über Zu- und Abfuhrraum > 10 vorhanden ist, so daß eine Gleichverteilung der Fluide über die Profilierung (20) einer oder mehrerer Plattenelemente (1.1 - 1.17) gegeben ist.

15. Strömungsmodul nach einem der vorangehenden Ansprüche, **dadurch gekennzeichnet, daß** die Strömungskanäle (30) für das erste und zweite Fluid um ca. 90^{o} gegeneinander gedreht sind.

16. Strömungsmodul nach einem der vorangehenden Ansprüche, **dadurch gekennzeichnet, daß** die Zu- und Abführkanäle über Flansche mit äusseren Zu- und Abführleitungen verbunden sind, wobei die Flansche im Bereich der Zu- und Abführkanäle Aussparungen zur Verminderung des Druckabfalls aufweisen.

17. Strömungsmodul nach einem der vorangehenden Ansprüche, **dadurch gekennzeichnet, daß** Plattenelemente aus Kunststoff oder Metall oder Graphit sind.

18. Strömungsmodul nach einem der vorangehenden Ansprüche, **dadurch gekennzeichnet, daß** die Plattenelemente (1.1 - 1.17) rechteckig sind.

19. Strömungsmodul nach einem der vorangehenden Ansprüche, **dadurch gekennzeichnet, daß** die Dichtungen (5) Elastomerdichtungen sind, die in Nuten (26), welche in den Plattenelementen verlaufen, integriert sind.

20. Strömungsmodul nach Anspruch 19, **dadurch gekennzeichnet, daß** die Nut (26) in Form einer umlaufenden Nut ausgebildet ist.

21. Strömungsmodul nach einem der Ansprüche 19 oder 20, **dadurch gekennzeichnet, daß** die Elastomerdichtungen (5) in die Nuten (26) einvulkanisiert oder eingelegt oder eingespritzt sind.

22. Strömungsmodul nach einem der vorangehenden Ansprüche, **dadurch gekennzeichnet, daß** die Profilierung (20) der Plattenelemente und/ oder Nuten (26) für die Dichtungen durch Prägung, z.B. von Metallfolien oder Graphitfolien oder durch Spritzguß oder Weichprägen/Stanzen oder durch spanabhebende Verfahren hergestellt sind.

23. Strömungsmodul nach einem der vorangehenden Ansprüche, **dadurch gekennzeichnet, daß** der Einlauf- und Auslaufbereich der Profilierung mit einem Stützblech (6) versehen ist, welches die benachbarte Dichtung (5) abstützt.

## Claims

1. A flow module containing a number of plate elements (1.1 - 1.17), wherein of the respective opposite surfaces of neighboring plate elements (1.1- 1.4, 1.6, 1.8, 1.9, 1.11 - 1.15, 1.17) at least one plate element surface has straight, parallel profiling (20) so that flow spaces are created between neighbored plate elements from a number of straight, parallel flow channels (30), wherein the flow spaces can be supplied alternately with a first and a second fluid via supply and removal channels, wherein the supply and removal channels are created by flush openings (8, 9, 10, 11) in the plate elements (1.1 - 1.17), and wherein there are seals (5) for sealing the flow spaces and supply and removal channels, and the openings (8, 9, 10, 11) for the supply and removal channels are essentially distributed over the entire area of the profiling (20), so that a corresponding supply and removal space is created, **characterized in that** there are several bars (22) in the openings (8, 9, 10, 11) for the supply and removal channels, which serve for the mechanical stabilization, wherein in profiled plate elements the surfaces of those bars that are located in the inflow area or the outflow area of the profiling are lowered with respect to the profiled plate element surface (21).

2. A flow module according to claim 1, **characterized in that** the plate elements (1.1 - 1.17) are made of a material with good thermal conductivity.

3. A flow module according to claim 1, **characterized in that** every second plate element (1.10) is a membrane that permits a substance exchange between the two fluids.

4. A flow module according to claim 1, **characterized in that** surfaces of individual plate elements (1.12, 1.14, 1.16) are coated with a reactive substance, for example a catalyst, wherein the surfaces to be coated are selected such that only one of the two fluids comes in contact with the reactive substance.

5. A flow module according to claim 1, **characterized in that** of the two respective opposite surfaces of neighbored plate elements, exactly one surface has a profiling.

6. A flow module according to claim 5, **characterized in that** the plate elements (1.1, 1.2, 1.3) are each profiled on one side.

7. A flow module according to claim 6, **characterized in that** continuously every second plate element (1.12, 1.14, 1.16) is coated with the reactive substance on its profiling.

8. A flow module according to claim 5, **characterized in that** the plate elements (1.6, 1.7, 1.8; 1.9, 1.10, 1.11; 1.15, 1.16, 1.17) are alternately profiled on both sides or not profiled on either side.

9. A flow module according to claim 8, **characterized in that** the plate elements that do not have profiling on either side are designed as foils (1.7, 1.16).

10. A flow module according to claim 8, **characterized in that** the plate elements that are not profiled on either side are coated with the reactive substance on one side so that only one of the two fluids comes into contact with the reactive substance.

11. A flow module according to claim 10, **characterized in that** the plate elements that are not profiled on either side and that are coated with a reactive substance on one side (1.16) are foils.

12. A flow module according to claim 8, **characterized in that** the plate elements that do not have profiling are membranes (1.10), which permit a substance exchange between the two fluids.

13. A flow module according to one of the previous claims, **characterized in that** the cross section of the supply or removal channels is larger than the sum of the cross sections of the flow channels (30) between two consecutive plate elements.

14. A flow module according to one of the previous claims, **characterized in that** there is a pressure drop ratio > 10 between the pressure drop over the profiling (20) and the pressure drop over the supply and removal space so that there is an equidistribution of the fluids over the profiling (20) of one or more plate elements (1.1 - 1.17).

15. A flow module according to one of the previous claims, **characterized in that** the flow channels (30) for the first and second fluid are rotated by approx. 90° with respect to each other.

16. A flow module according to one of the previous claims, **characterized in that** the supply and removal channels are connected with external supply and removal lines via flanges, wherein the flanges have indentations in the area of the supply and removal channels to reduce the pressure drop.

17. A flow module according to one of the previous claims, **characterized in that** the plate elements are made of plastic or metal or graphite.

18. A flow module according to one of the previous claims, **characterized in that** the plate elements (1.1 - 1.17) are rectangular.

19. A flow module according to one of the previous claims, **characterized in that** the seals (5) are elastomer seals that are integrated in grooves (26) extending in the plate elements.

20. A flow module according to claim 19, **characterized in that** the groove (26) is designed as a circumferential groove.

21. A flow module according to one of the claims 19 or 20, **characterized in that** the elastomer seals (5) are vulcanized, inserted, or injected into the grooves (26).

22. A flow module according to one of the previous claims, **characterized in that** the profiling (20) of the plate elements and/or grooves (26) for the seals are manufactured by stamping, for example of metal foils or graphite foils, or by die casting or by soft stamping/punching or by cutting processes.

23. A flow module according to one of the previous claims, **characterized in that** the inflow and outflow area of the profiling is equipped with a supporting plate (6), which supports the neighbored seal (5).

## Revendications

1. Module d'écoulement comprenant une pluralité d'éléments de plaques (1.1 - 1.17), dans lequel sur les deux surfaces opposées des éléments de plaque voisins (1.1-1.4, 1.6, 1.8, 1.9, 1.11-1.15, 1.17) au moins une surface d'élément de plaques présente un relief profilé (20) parallèle et rectiligne, de telle manière que des espaces d'écoulement soient formés, entre les éléments de plaques voisins, par une pluralité de canaux d'écoulement (30) parallèles et rectilignes, les espaces d'écoulement pouvant être alimenté par un premier et un deuxième fluide, en alternance par des canaux d'alimentation et d'évacuation, les canaux d'alimentation et d'évacuation étant formés par des découpes (8, 9, 10, 11) alignées entre elles dans les éléments de plaques (1.1 - 1.17), des joints (5) étant présents pour rendre étanches les espaces d'écoulement et les canaux d'alimentation et d'évacuation, et les découpes (8, 9, 10, 11) pour les canaux d'alimentation et d'évacuation s'étendant pour l'essentiel sur toute la zone du relief profilé (20), si bien qu'un espace correspondant d'alimentation et d'évacuation est formé, **caractérisé par le fait que** dans les découpes (8, 9, 10, 11) pour les canaux d'alimentation et d'évacuation sont disposées plusieurs nervures (22) pour la stabilisation mécanique, les surfaces des nervures situées dans la zone d'entrée ou de sortie du relief profilé étant en retrait dans les éléments de plaque profilés par rapport à la surface des éléments de plaque profilés (21).

2. Module d'écoulement suivant la revendication 1, **caractérisé par le fait que** les éléments de plaques (1.1 - 1.17) se composent d'un matériau possédant une bonne conductibilité thermique.

3. Module d'écoulement suivant la revendication 1, **caractérisé par le fait qu'**un élément de plaque sur deux (1.10) est une membrane qui permet un échange de matière entre les deux fluides.

4. Module d'écoulement suivant la revendication 1, **caractérisé par le fait que** les surfaces des différents éléments de plaques (1.12, 1.14, 1.16) sont recouvertes d'un matériau réactif, par exemple un catalyseur, les surfaces à recouvrir étant sélectionnées de telle sorte qu'un seul des deux fluides puisse entrer en contact avec le matériau réactif.

5. Module d'écoulement suivant la revendication 1, **caractérisé par le fait que** sur les deux surfaces se faisant face des éléments de plaque voisins, une surface exactement présente un relief profilé.

6. Module d'écoulement suivant la revendication 5, **caractérisé par le fait que** les éléments de plaques (1.1, 1.2, 1.3) sont profilés d'un seul côté.

7. Module d'écoulement suivant la revendication 6, **caractérisé par le fait qu'**en continuité un élément de plaque sur deux (1.12, 1.14, 1.16) est recouvert sur son relief profilé par le matériau réactif.

8. Module d'écoulement suivant la revendication 5, **caractérisé par le fait que les** éléments de plaque (1.6, 1.7, 1.8, 1.9, 1.10, 1.11, 1.15, 1.16, 1.17) présentent en alternance soit un relief profilé des deux côtés soit ne présentent aucun relief profilé des deux côtés.

9. Module d'écoulement suivant la revendication 8, **caractérisé par le fait que** les éléments de plaque qui ne présentent aucun relief profilé des deux côtés sont exécutés sous forme de feuille (1.7-1.16).

10. Module d'écoulement suivant la revendication 8, **caractérisé par le fait que** les éléments de plaque qui ne présentent aucun relief profilé des deux côtés sont recouverts d'un côté par le matériau réactif de telle manière qu'un seul des deux fluides est amené en contact avec le matériau réactif.

11. Module d'écoulement suivant la revendication 10, **caractérisé par le fait que** les éléments de plaque qui ne présentent aucun relief profilé des deux côtés et qui sont recouverts d'un côté par le matériau réactif (1.16) sont des feuilles.

12. Module d'écoulement suivant la revendication 8, **caractérisé par le fait que** les éléments de plaque qui ne présentent aucun relief profilé sont des membranes (1.10) qui permettent un échange de matière entre les deux fluides.

13. Module d'écoulement suivant l'une des revendications précédentes, **caractérisé par le fait que** la section des canaux d'alimentation ou d'évacuation est supérieure à la somme des sections des canaux d'écoulement (30) présents entre deux éléments de plaques voisins.

14. Module d'écoulement suivant l'une des revendications précédentes, **caractérisé par le fait qu'**un rapport de chute de pression >10 existe entre la chute de pression au niveau du relief profilé (20) et la chute de pression au niveau du volume d'alimentation et d'évacuation, de telle sorte qu'une répartition équilibrée des fluides est possible entre le relief profilé (20) d'un ou de plusieurs éléments de plaques (1.1-1.17).

15. Module d'écoulement suivant l'une des revendications précédentes, **caractérisé par le fait que** les canaux d'écoulement (30) pour le premier et le deuxième fluide sont orientés l'un par rapport à l'autre d'environ 90°.

16. Module d'écoulement suivant l'une des revendications précédentes, **caractérisé par le fait que** les canaux d'alimentation et d'évacuation sont reliés par des brides aux conduites d'alimentation et d'évacuation extérieures, les brides dans la zone des canaux d'alimentation et d'évacuation présentant des évidements pour réduire la chute de pression.

17. Module d'écoulement suivant l'une des revendications précédentes, **caractérisé par le fait que** les éléments de plaques sont en matière plastique, en métal ou en graphite.

18. Module d'écoulement suivant l'une des revendications précédentes, **caractérisé par le fait que** les éléments de plaques (1.1 - 1.17) sont rectangulaires.

19. Module d'écoulement suivant l'une des revendications précédentes, **caractérisé par le fait que** les joints (5) sont des joints élastomères qui sont intégrés dans des rainures (26) qui parcourent les éléments de plaques.

20. Module d'écoulement suivant la revendication 19, **caractérisé par le fait que** la rainure (26) a une forme circulaire.

21. Module d'écoulement suivant l'une des revendications 19 ou 20, **caractérisé par le fait que** les joints élastomères (5) dans les rainures (26) sont vulcanisés, déposés ou injectés.

22. Module d'écoulement suivant l'une des revendications précédentes, **caractérisé par le fait que** le relief profilé (20) des éléments de plaques et/ou les rainures (26) pour les joints sont fabriqués par matriçage, par exemple de feuilles métalliques ou de feuilles de graphite ou par moulage par injection ou estampage/découpage ou par des procédés par enlèvement de copeaux.

23. Module d'écoulement suivant l'une des revendications précédentes, **caractérisé par le fait que** la zone d'entrée et de sortie du relief profilé est pourvue d'une plaque d'appui (6) qui soutient le joint voisin (5).
